# EUROPEAN PATENT APPLICATION

(11) **EP 4 834 454 A1**
(43) Date of publication of application: **04.11.2026**
(21) Application number: 26176351.0
(22) Date of filing: 04.05.2026
(51) Int. Cl.: B01D 19/02, B03D 1/14, C02F 1/24

(54) **FOAM FRACTIONATION EFFLUENT**

(30) Priority: 02.05.2025 US 202563799276 P
(71) Applicant: Ovivo Water Inc., Montreal, QC H3A 2R7 (CA)
(72) Inventor: Rush, Isaac Jefferson, Taylorsville, 84123 (US); Laird, Colton, South Jordan, 84095 (US); Klocke, Zia, Salt Lake City, 84106 (US)
(74) Representative: Meissner Bolte Partnerschaft mbB

(57) **Abstract**

In a foam fractionation column (fig. [3]), a foam influent cone (42) is eccentrically positioned in the cylindrical column (46a, 46b). A long slope (42a) on one side of the cone's (42) upper surface provides an effective slope plate for descent of collapsed foam liquid to an outlet (50) from the foam chamber (44). The offset prevents spray-down drip from a liquid spray nozzle (52) above into the cone's top opening (34).

## Description

### Background of the Invention

This application claims benefit of provisional application Serial No. 63/799,276, filed May 2, 2025.

This application concerns foam fractionation for separating out components of liquid by foaming. In particular the invention is concerned with a coned influent at the upper, exit end of a foam fractionation column. One important application is in separating out PFAS (per- and polyfluoroalkyl substances) from water.

Conventional foam fractionation columns have utilized coned influent and sloped effluent plates. The "coned influent" is actually at the top of a foam chamber, where the foam rises through a narrow outlet collar to be collected, separating the foam and collapsed foam from the liquid from which it was generated. "Coned influent" is in reference to the next stage of treatment for the foamate/collapsed foam. Typically a coned influent consists of a cone with apex upward, with an exit collar (typically cylindrical) secured at an opening at the cone's apex. Typically the foam rising through the collar will fall down onto a sloped plate or flat disk that leads to an opening or outlet port through the wall of the column. The overflowing foam exits through the outlet port.

Above the cone's apex, at or near the top of the fractionation column, is a spray nozzle, centered in the column to spray downwardly over the upper wall of the cone. The purpose is to collapse the foam so it does not overfill the cavity and can flow through the system as a liquid stream, and to prevent the foam collection cup above the cone from filling completely and blocking new foam from entering.

A problem with typical coned influent/sloped effluent assemblies is that spray-down drip can occur directly over the cone, that is, liquid dripping from the spray nozzle, particularly after the nozzle is shut off. The dripping liquid tends to drop into the collar of the influent cone, which is directly below, collapsing the incoming foam that is still rising in the influent pipe or collar. One way to address this is by using a nozzle with a cone-shaped spray pattern (rather than a full spray), so the spray does not hit the center directly. However, even cone-shaped nozzles can cause problems once they are turned off. Many nozzles continue to drip after shutoff, and if the nozzle is positioned directly above the influent pipe, this post-shutoff drip can collapse the incoming foam, reducing the foam collection rate.

An example of a foam fractionation column is shown in U.S. Pub. No. 2024/0279084.

### Summary of the Invention

According to the invention a foam fractionation column is provided in the usual configuration of a tubular column with a center axis oriented essentially vertically, including a foam origination chamber in which foam rises up to a coned influent as an effective ceiling of that chamber. The foam can be generated from liquid in a reaction section of the foam origination chamber, or it can be generated outside the chamber in another vessel, then directed into the foam chamber. The cone at the top of the foam chamber has a foam outlet opening at its apex. Preferably a tubular collar or "influent" tube or pipe is included, through which the foam travels upwardly into the space above the cone.

The invention includes the feature that the cone is eccentric, i.e. an axis of the cone is offset from the center of the fractionation column, closer to one side of the column than to an opposite side. A spray nozzle may be optimally located in the center of the column, above the cone, but not directly over the collar. The effect produces a longer and deeper effluent slope toward the opposite side of the column. A discharge nozzle or exit port is provided in the opposite side of the column, located at the lowest point of the cone.

The cone configuration of the invention, with an eccentric cone within a column, thus provides a discharge slope for foam/liquid emanating from the top of the cone, without requiring a separate plate or disk fitted around the collar of the cone. This simplifies the assembly and minimizes spray-down drip into the influent tube where the foam exits the cone, including when spray is shut off. A single off-center cone structure maintains proper foam flow while reducing complexity and material.

Although the cone's axis preferably is vertical in the column, or essentially vertical, it can be tilted if desired, up to about 10°, with the tilt being such as to bring the lower side of the eccentric cone even lower, with the exit port positioned at the low point

An objective of the invention is to simplify and make more effective the design of a cone configured for gathering and discharge of foam in a foam fractionation column. These and other objects and features of the invention will be apparent from the following description of a preferred embodiment, considered along with the accompanying drawings.

### Description of the Drawings

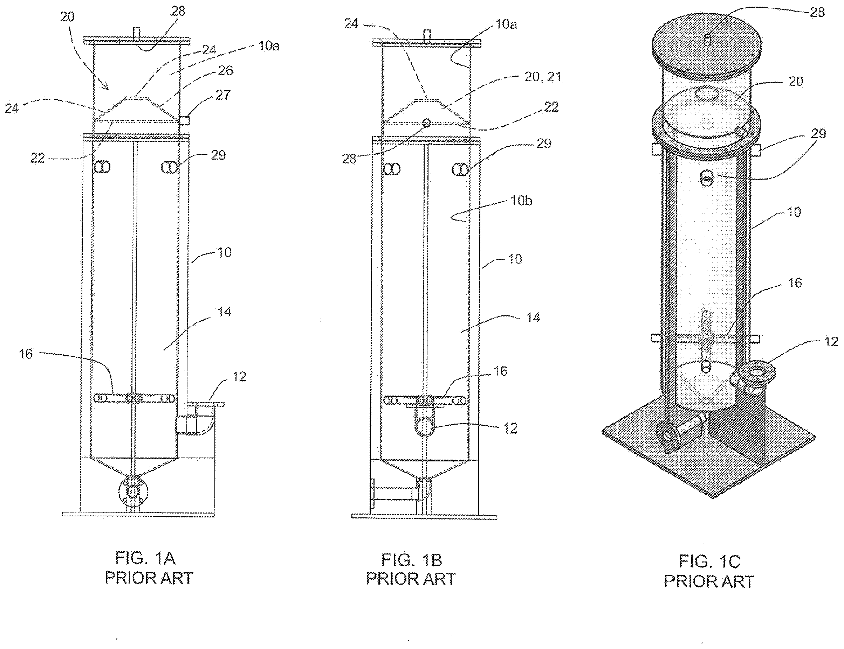

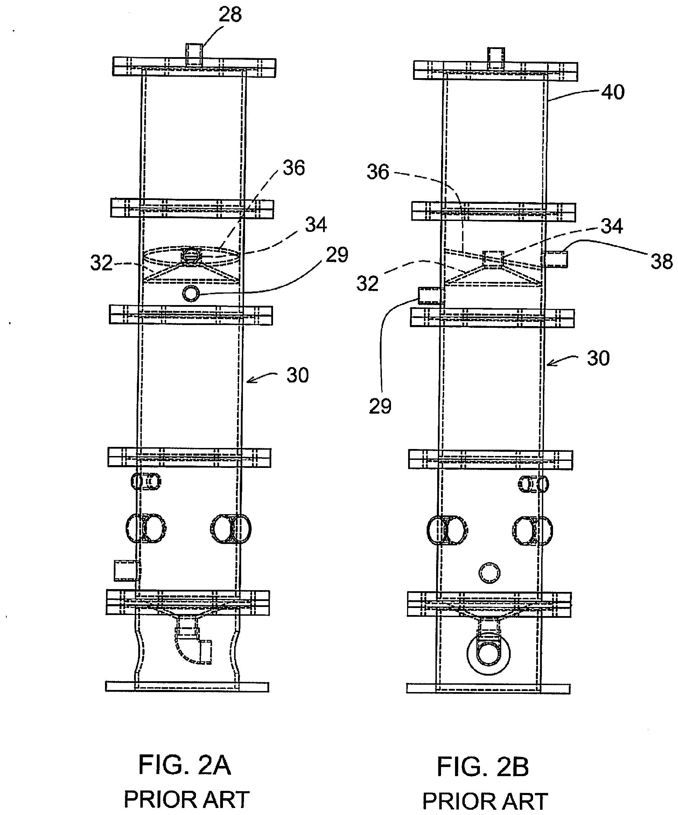

The figures comprising Figures 1A - 1C and 2A - 2B show sectional and perspective views of prior art foam fractionation columns with foam chambers and coned influents to those chambers. Figures 1A through 1C show one conventional arrangement for collecting the foam and liquid for discharge, while Figures 2A and 2B show another.
Figure 3 is a cross sectional view showing the foam chamber and concentrate head section of a foam collection and discharge arrangement according to the invention.
Figure 4 is an elevational cross section showing the apparatus of the invention from a different angle, as seen along the line 4-4 in Figure 3.
Figure 5 is a perspective view showing the entire foam fractionation column according to the invention.
Figure 6 is a detail view in perspective showing an eccentric cone of the invention within the column.

### Description of Preferred Embodiments

Figures 1A, 1B and 1C show a typical prior art design for a foam fractionation column 10. Near the bottom of this column is a "cleaned" liquid outlet 12. Foam is generated in a foam generation section 14, which can be via an air blower or venturi device 16 as shown.

As this progresses, foam rises up through the column 10, to an effective partial ceiling 20 formed by a cone 21 with apex upward, the lower annular rim 22 of the cone being in contact with the interior of the column wall 10a. The cone has a central opening at 24, thus a truncated upper end, through which foam is gathered and dispensed down the exterior slope 26 of the cone, generally evenly on the cone's surface, to be discharged at a discharge port 27. The upper volume 10a of the column can be called a foam/liquid collection chamber, or a foam cup, while the volume 10b below the cone and above liquid in the column can be called a foam chamber. A spray nozzle 28 is centrally located at the top of the column, to spray liquid down when needed onto the foam in the volume 10a. This is needed only when the foam becomes too structural and has difficulty collapsing to flow to the collection tank. Spray-down drip will occur into and through the cone's opening, as explained above, when the spray is shut off.

In this design of Figures 1A to 1C, process water influent ports 29 are shown at four locations around the column, to help distribute the influent untreated water evenly across the surface of the column. The influent water typically enters such a column near the top, under the cone, and "clean" water exits at the bottom, e.g. the output port 12. This setup maximizes contact time between the water (traveling downward) and the foam bubbles (traveling upward), using a counter-current design to enhance contact. The exact vertical location of the influent port -- whether on the "column header" or the reaction section -- is more a matter of design preference, as long as it is near the top of the column.

Figures 2A and 2B show another conventional prior art design of a foam fractionation column 30, wherein a foam gathering cone 32 is fitted with a discharge collar or influent tube 34 at its apex. The collar 34 passes through a disk or flat plate 36 that provides a slope down which the foam and liquid will travel, to a foam/liquid discharge port 38. The slope of the plate 36, typically about 10°, is intended to help direct foam to the outlet port 38. However, this design was relatively complex and required an elliptical hole through the disk or plate 36, with the disk sealed against the exterior surface of the discharge collar 34.

As in Figures 1A - 1C, a dirty water influent port 29 is shown in the column just below the cone 32.

Figures 2A and 2B also show a concentrate head section 40 at the top of the foam fractionation column 30, in which foam can collect and build up.

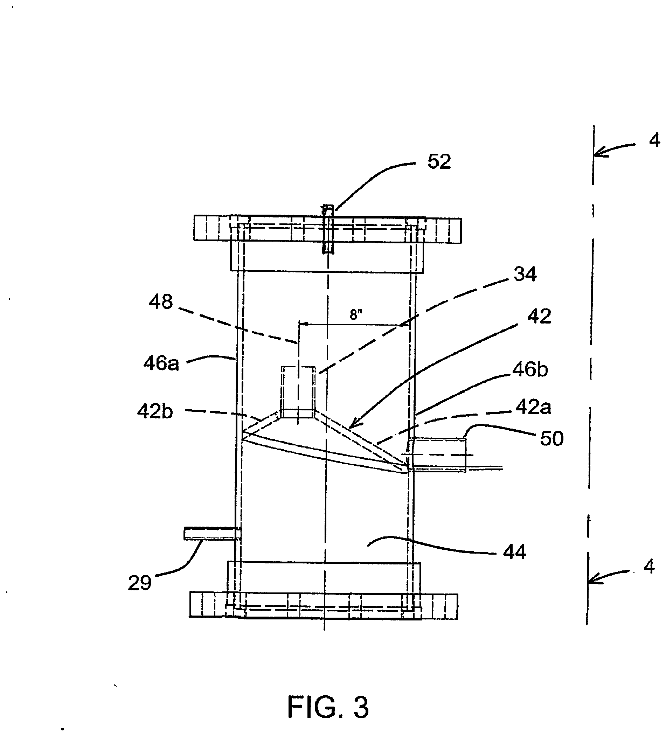

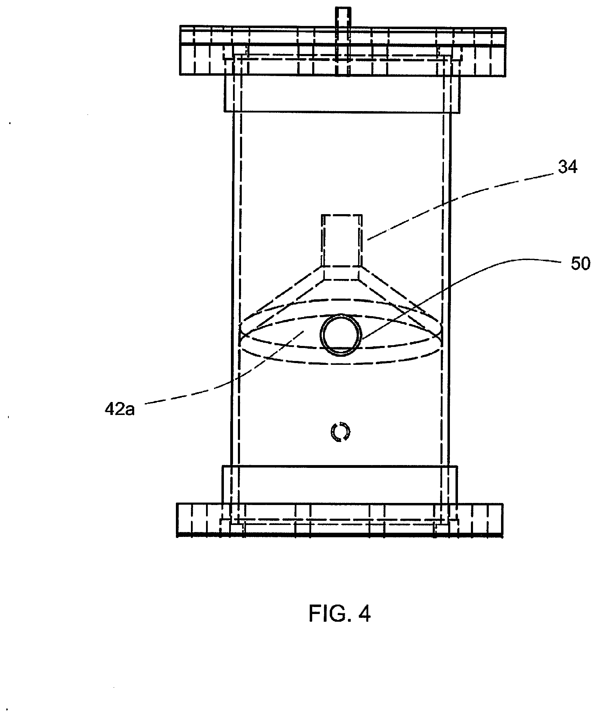

Figures 3 through 6 show foam fractionation apparatus according to the invention. As the drawings illustrate, the cone 42 at the top of the foam chamber 44 is eccentrically positioned within the fractionation column 46 (the lower parts of the fractionation column 46 are not shown in Figures 3 and 4). The cone has a center axis 48 which is preferably vertical or essentially vertical in the column, but spaced off center in the column, closer to one side 46a than to an opposite side 46b of the column. This produces a longer and deeper slope 42a at the side 46b of the column, as illustrated. At the side 46a of the column the cone slope 42b is shorter and less deep, due to the truncation effect of the eccentricity of the cone. The lower rim of the cone is affixed, around its periphery, to the interior wall of the column, sealed against liquid flow. As shown in the drawing, an outlet port 50 is positioned at the bottom of the long slope 42a of the column, i.e. at the lowest point of the cone. Foam rising through the collar 34 at the top of the cone flows down to and along the cone's upper surface, while collapsing, and is drawn by gravity to the exit port 50.

As in the prior systems a water spray nozzle 52 in the ceiling of the column is included to direct a spray onto the foam when needed after it exits the collar or tube 34, preferably not directed at the collar 34 itself. Foam is collapsed to liquid so it will flow through the system as a liquid stream and not clog the space above the cone with foam. The off-center position of the cone axis and collar 34 prevents drippage from the nozzle directly into the collar, as explained above. As in the prior designs a dirty water input port 29 may be located at a high location but below the cone 42.

Figure 4 is a view from the exit port 50 side of the fractionation column, as seen along the line 4-4 in Figure 3.

As seen in Figure 3 and 4, the outlet port 50 is a cylindrical tube or pipe that may extend through the column wall a slight distance.

The influent tube 34 at top of the cone should be spaced from the column wall 46a, so that foam does not become trapped between the tube 34 and the wall and so that easier cleaning is facilitated. An approximately 2:1 distance relationship of the tube position to the walls is shown, for an exemplary column of about 12" diameter.

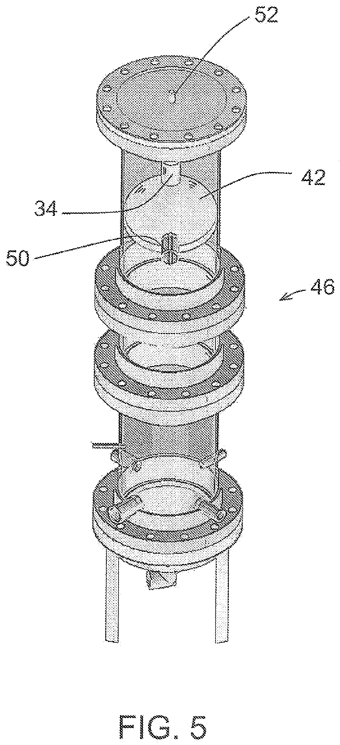

Figure 5 shows the entire foam fractionation column 46, with column walls shown transparent for clarity.

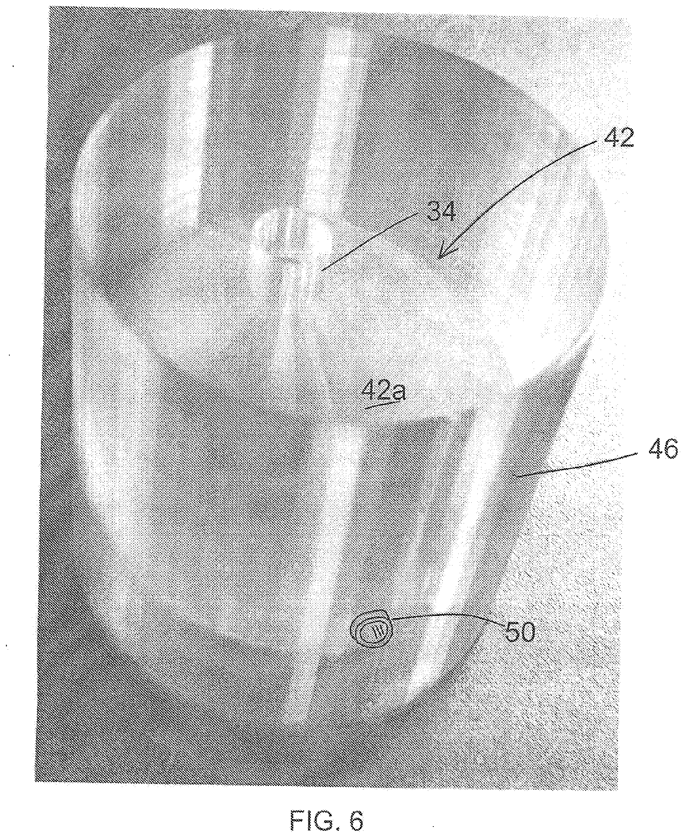

Figure 6 shows the eccentric cone 42 within a cylindrical portion of the column 46 as shown in Figures 3 and 4.

The above described preferred embodiments are intended to illustrate the principles of the invention, but not to limit its scope. Other embodiments and variations to these preferred embodiments will be apparent to those skilled in the art and may be made without departing from the spirit and scope of the invention as defined in the following claims.

## Claims

1. A foam fractionation column for separating foam from a liquid, comprising:
a tubular column with a center axis oriented vertically and having a foam chamber in which foam rises, the foam being generated from liquid either in the column below the foam chamber or exterior to the column and entering the foam chamber through an inlet,
a cone at an upper, discharge end of the foam chamber, the cone extending through the cross section of the column and in contact with interior walls of the column, tapering to a narrow, upper cone outlet,
a liquid spray down system including a sprayer above the cone and centered in the column, for use in controlling foam buildup above the cone when needed,
the upper cone outlet being eccentric in the column, off the center axis of the column and closer to one side of the column than an opposite side, producing a longer and deeper effluent slope toward said opposite side, such that the upper cone outlet is laterally offset from the sprayer,
a discharge outlet in said opposite side of the column for foam and liquid to exit the column, located just above where the cone contacts the interior wall of the column at said opposite side, the discharge outlet being at a lowest point of the effluent slope,
whereby the foam rising through the outlet descends along the effluent slope of the cone and gathers toward the outlet as a lowest point on the cone's effluent slope, for discharge through the outlet, minimizing spray-down liquid drip from the sprayer back through the upper cone outlet.

2. A foam fractionation column as in claim 1, wherein the cone has a vertical axis.

3. A foam fractionation column as in claim 1, wherein the foam has been generated within the column.

4. A foam fractionation column as in claim 1, wherein the upper cone outlet is at a position in the column at a distance from said opposite side which is twice a distance from said one side.
